# EUROPEAN PATENT SPECIFICATION

(11) **EP 1 795 567 B1**
(45) Date of publication and mention of the grant of the patent: **25.08.2010**
(21) Application number: 06025122.0
(22) Date of filing: 05.12.2006
(51) Int. Cl.: C09J 7/02

(54) **Light-shielding pressure-sensitive adhesive sheet**
Lichtabschirmende, druckempfindliche Klebefolie
Feuille adhésive sensible à la pression étanche à la lumière

(30) Priority: 06.12.2005 JP 2005352768
(43) Date of publication of application: 13.06.2007
(60) Divisional application: 09008215.7
(73) Proprietor: NITTO DENKO CORPORATION, Osaka (JP)
(72) Inventor: Takahashi, Akiko, Ibarakai-shi Osaka (JP); Okada, Kenichi, Ibarakai-shi Osaka (JP); Kanamaru, Mika, Ibarakai-shi Osaka (JP)
(74) Representative: Grünecker, Kinkeldey, Stockmair & Schwanhäusser Anwaltssozietät

(56) References cited:
- JP-A- 2002 235 053
- US-A1- 2003 089 516
- US-A1- 2004 076 768

## Description

### FIELD OF THE INVENTION

The present invention relates to a light-shielding pressure-sensitive adhesive sheet including a water-dispersible acrylic pressure-sensitive adhesive composition having a light-shielding property.

### BACKGROUND OF THE INVENTION

Acrylic polymers are widely utilized as a principal component of pressure-sensitive adhesive materials since they have a wide range of selection of the monomer species and the pressure-sensitive adhesive materials thus obtained have various excellent characteristics. However, solvent-based acrylic pressure-sensitive adhesives are environmentally undesirable because of the use of organic solvents, and are recently regarded increasingly as a cause of sick house syndrome. Therefore, elimination of solvent is strongly desired. On the other hand, water-dispersible acrylic pressure-sensitive adhesive materials utilize water as the solvent and have little detrimental influences on the environment and on the human body. In view of such a background, water-dispersible acrylic pressure-sensitive adhesive materials having various functions and characteristics have been developed.

With regard to the pressure-sensitive adhesive tape employing a water-dispersible acrylic pressure-sensitive adhesive material, a light shielding property may be required for certain applications. Conventionally, as the pressure-sensitive adhesive tape having the light-shielding property, there have been disclosed a pressure-sensitive adhesive tape prepared by combining a light-shielding substrate with an optically-transparent pressure-sensitive adhesive layer, and a pressure-sensitive adhesive tape formed by further combining a light-shielding layer therewith (Patent Reference 1). It has also been tried to provide the pressure-sensitive adhesive material itself with a light-shielding property. However, in providing the pressure-sensitive adhesive itself with the light-shielding property by adding a colorant or the like to the adhesive composition, various difficulties are involved as will be explained later and the colorant detrimentally affects the adhesive property of the pressure-sensitive adhesive material. Consequently, a pressure-sensitive adhesive material having a sufficient light-shielding property in itself has not yet been obtained, and a pressure-sensitive adhesive sheet having a sufficient light-shielding property is only obtained by combining a colored pressure-sensitive adhesive material and a colored substrate (Patent Reference 2).

As a colorant for providing a pressure-sensitive adhesive material with a light-shielding property, a black colorant such as carbon black is commonly used. It is however difficult to add, in a pressure-sensitive adhesive material including a water-dispersible acrylic polymer as a principal component, a colorant in an amount capable of achieving a sufficient light-shielding property and to obtain a pressure-sensitive adhesive material also satisfying other properties such as an adhesive power and a flexibility. For example, when a large amount of the colorant is added for attaining a sufficient light-shielding property, the added colorant itself is liable to hinder the adhesive property and to render the pressure-sensitive adhesive harder, thereby reducing the adhesive property.

In various references including patent references (for example Patent Reference 3) relating to the water-dispersible acrylic pressure-sensitive adhesive materials, it is stated that a colorant or a pigment may be added, but these references intend an addition in a very small amount for the purposes of rendering the pressure-sensitive adhesive material visible or partially cutting off the light of a specified wavelength, and no technology is known for adding a large amount of colorant to the water-dispersible acrylic pressure-sensitive adhesive material for the purpose of light shielding. Further, although an adhesive material formed by adding carbon black to an urethane adhesive is disclosed (Patent Reference 4), the disclosure includes only the addition of a small amount of colorant for rendering the adhesive visible and does not mention a technology of adding a large amount of colorant capable of attaining a sufficient light-shielding property and further obtaining a pressure-sensitive adhesive having an excellent adhesive property.
US 2004/0076768 relates to a double-faced tape suitable for fixing a liquid crystal display panel and a backlight module together.
Patent Reference 1: JP-A-8-6229
Patent Reference 2: JP-A-5-43846
Patent Reference 3: JP-A-2003-82302
Patent Reference 4: JP-T-3-501132

JP 2002-235053 discloses a light screening pressure-sensitive adhesive sheet.

### SUMMARY OF THE INVENTION

The present invention is to provide a pressure-sensitive adhesive sheet which is prepared with a pressure-sensitive adhesive composition containing a water-dispersible acrylic polymer as a main component and a colorant, and is excellent in light-shielding property and adhesive property.

It was found that the colorant can be dispersed in the pressure-sensitive adhesive composition with a satisfactory dispersion stability by devising a mixing method in mixing an aqueous dispersion containing the water-dispersible acrylic polymer and the colorant. Furthermore, it is found that, by adding sufficient amount of colorant, a light-shielding pressure-sensitive adhesive sheet which includes a pressure-sensitive adhesive layer excellent in light-shielding property and adhesive property can be obtained. The present invention is solved on the basis of claims 1 to 7.

Namely, the present invention provides a light-shielding pressure-sensitive adhesive sheet, which comprises a light-shielding pressure-sensitive adhesive layer obtainable by forming, into a sheet form, a pressure-sensitive adhesive composition containing a water-dispersible acrylic polymer as a main component and a colorant, wherein the pressure-sensitive adhesive composition is obtainable by mixing in a dispersion liquid containing an acrylic polymer an aqueous dispersion having a solid concentration of from 20 to 50% by weight of a colorant and wherein the pressure-sensitive adhesive layer has a light transmittance of 1% or less.

The present invention also provides a light-shielding pressure-sensitive adhesive sheet, which comprises an optically-transparent substrate; and a light-shielding pressure-sensitive adhesive layer comprising a pressure-sensitive adhesive composition containing a water-dispersible acrylic polymer as a main component and a colorant, said layer being disposed on at least one side of said substrate, wherein the pressure-sensitive adhesive sheet has a light transmittance of 1% or less.

As the aforementioned colorant, a colorant having a median size of 0.5 µm or less may be preferably used.

As the colorant, for example, carbon black may be used.

The light-shielding pressure-sensitive adhesive sheet of the invention can be preferably used for fixing for example, an automotive material, a residential material, an electronic component and the like.

The light-shielding pressure-sensitive adhesive sheet of the present invention may be constructed as a light-shielding pressure-sensitive adhesive sheet without including a substrate, since the pressure-sensitive adhesive layer is formed by a light-shielding pressure-sensitive adhesive material having a sufficient light-shielding property in itself. Further, in the case that it is constructed as a light-shielding pressure-sensitive adhesive sheet including a substrate, there may be broad options for the selection of substrate as it may be produced by a substrate without a light-shielding property. Additionally, since it is not necessary to laminate plural light-shielding layers in order to secure the light-shielding property, it can be produced in a simpler manufacturing process and is superior economically. Furthermore, since the pressure-sensitive adhesive layer can be produced with a pressure-sensitive adhesive composition which does not contain an organic solvent as the solvent, the light-shielding pressure-sensitive adhesive sheet of the present invention is free from a contamination by a residual organic solvent and is preferably used for fixing an automotive material, a residential material, an electronic component and the like.

### BRIEF DESCRIPTION OF THE DRAWINGS

Figs. 1A and 1B are schematic cross-sectional views respectively showing examples of a double-sided light-shielding pressure-sensitive adhesive sheet of the present invention which does not include a substrate.
Figs. 2A and 2B are schematic cross-sectional views respectively showing examples of a double-sided light-shielding pressure-sensitive adhesive sheet of the present invention which includes a substrate.
Figs. 3A and 3B are schematic cross-sectional views respectively showing examples of a single-sided light-shielding pressure-sensitive adhesive sheet of the present invention which includes a substrate.

### Description of Symbols

1 optically-transparent substrate
2 light-shielding pressure-sensitive adhesive layer
3 releasable liner

### DETAILED DESCRIPTION OF THE INVENTION

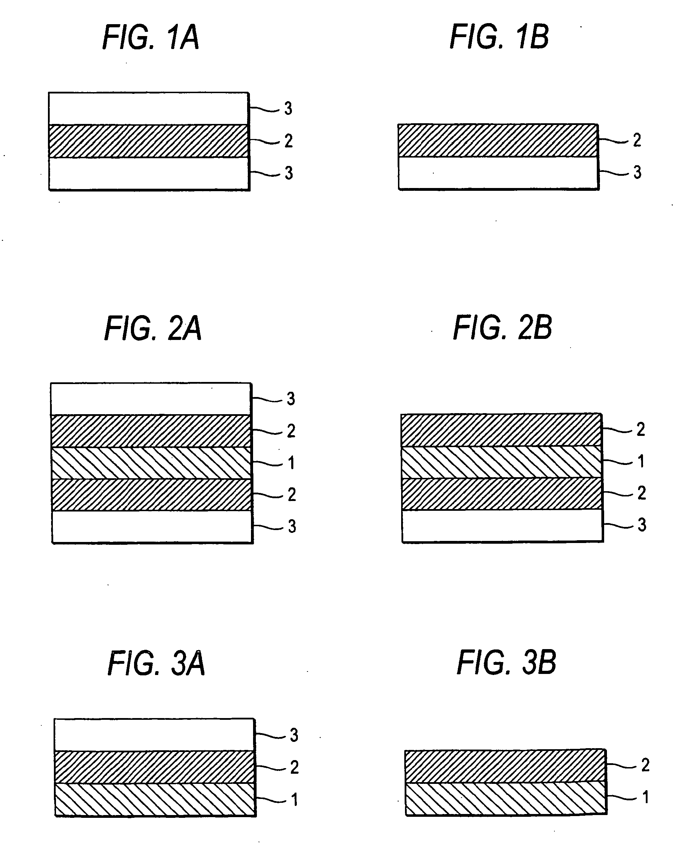

The light-shielding pressure-sensitive adhesive sheet of the present invention includes a light-shielding pressure-sensitive adhesive layer obtainable by forming a pressure-sensitive adhesive composition containing a water-dispersible acrylic polymer as a main component and a colorant into a sheet form. The light-shielding pressure-sensitive adhesive sheet may be constructed solely of such a light-shielding pressure-sensitive adhesive layer, or may include such a light-shielding pressure-sensitive adhesive layer on at least one side of an optically-transparent substrate. The structure of the light-shielding pressure-sensitive adhesive sheet of the invention will be explained with reference to the accompanying drawings. Figs. 1A to 3B are respectively cross-sectional views schematically showing examples of the light-shielding pressure-sensitive adhesive sheet of the invention. In Figs. 1A to 3B, there are shown an optically-transparent substrate 1, a light-shielding pressure-sensitive adhesive layer 2, and a releasable liner 3, respectively. The light-shielding pressure-sensitive adhesive sheet of the invention may constructed as a double-sided adhesive sheet without including a substrate as shown in Figs. 1A and 1B, or a double-sided adhesive sheet including a substrate as shown in Figs. 2A and 2B Furthermore, it may be constructed as a single-sided adhesive sheet including a substrate as shown in Figs. 3A and 3B. Herein, the releasable liner is not included in constituent components of the pressure-sensitive adhesive sheet.

The light-shielding pressure-sensitive adhesive sheet may be constructed, as shown in Figs. 1A, 2A and 3A, in a sheet shape by covering surfaces (pressure-sensitive adhesive surfaces) of the light-shielding pressure-sensitive adhesive layer 2 with the releasable liners 3. It may also be wound into a roll, in case of a double-sided light-shielding pressure-sensitive adhesive sheet as shown in Figs. 1B and 2B, by covering one pressure-sensitive adhesive surface with the releasable liner 3.while leaving the other adhesive surface in an exposed state, or, in case of a single-sided light-shielding pressure-sensitive adhesive sheet as shown in Fig. 3B, without using the releasable liner. In this regard, the light-shielding pressure-sensitive adhesive sheet of the invention may be formed as a light-shielding pressure-sensitive adhesive tape which has a tape form.

Since the light-shielding pressure-sensitive adhesive layer 2 constituting the light-shielding pressure-sensitive adhesive sheet of the invention has a light-shielding property, the pressure-sensitive adhesive sheet has a light transmittance of 1% or less, preferably 0.5% or less and particularly preferably 0%, both in a case of a pressure-sensitive adhesive sheet without a substrate as shown in Figs. 1A and 1B and in a case of a pressure-sensitive adhesive sheet including a substrate as shown in Figs. 2A, 2B, 3A and 3B. In a case of a pressure-sensitive adhesive sheet without a substrate as shown in Figs. 1A and 1B, the light transmittance of the pressure-sensitive adhesive sheet is measured as the light transmittance of the light-shielding pressure-sensitive adhesive layer 2 (measured, for example, in a state where both side of the light-shielding pressure-sensitive adhesive layer 2 is covered with releasable liners 3 without light-shielding property). In a case of a pressure-sensitive adhesive sheet including a substrate as shown in Figs. 2A, 2B, 3A and 3B, the light transmittance of the pressure-sensitive adhesive sheet is measured as a laminate member of the optically-transparent substrate 1 and the light-shielding pressure-sensitive adhesive layer 2 (or a laminate member of the optically-transparent substrate 1, the light-shielding pressure-sensitive adhesive layer 2 and the releasable liner 3). The light transmittance can be measured with a Haze Meter (trade name: HZ-1), manufactured by Suga Test Instruments Co., Ltd.

The light-shielding pressure-sensitive adhesive layer 2 is produced with a light-shielding pressure-sensitive adhesive composition, which is prepared by adding, in a dispersion liquid containing an acrylic polymer, a colorant in a state of an aqueous dispersion having a solid concentration of from 20 to 50% by weight.

The aforementioned water-dispersible acrylic polymer is an acrylic polymer composition in an emulsion, in which an acrylic polymer is dispersed in water. Examples of the acrylic polymer includes a polymer containing, as a principal monomer component (monomer component) thereof, an alkyl (meth)acrylate ester represented by the following formula (1): 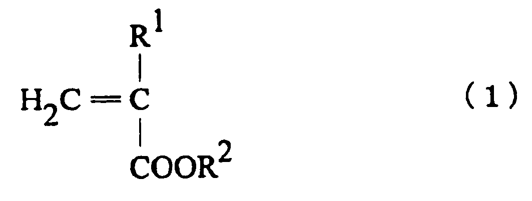 wherein R¹ represents a hydrogen atom or a methyl group; and R² represents an alkyl group containing 2 to 14 carbon atoms.

Examples of R² (alkyl group having 2 to 14 carbon atoms) in the formula (1) include a methyl group, an ethyl group, a propyl group, an isopropyl group, a butyl group, an isobutyl group, a s-butyl group, a t-butyl group, a pentyl group, an octyl group, an isooctyl group, a 2-ethylhexyl group, a nonyl group, an isononyl group, a decyl group, an isodecyl group, an undecyl group, and dodecyl group. The alkyl group represented by R² is preferably an alkyl group containing 2 to 10 carbon atoms, and particularly preferably a butyl group or a 2-ethylhexyl group.

Specific examples of the alkyl (meth)acrylate ester include butyl (meth)acrylate, isobutyl (meth)acrylate, s-butyl (meth)acrylate, t-butyl (meth)acrylate, pentyl (meth)acrylate, isoamyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate.

The alkyl (meth)acrylate ester may be employed singly or in a combination of two or more kinds. For example, as the alkyl (meth)acrylate ester, it is possible to use butyl acrylate singly or to use butyl acrylate and 2-ethylhexyl acrylate in combination. In the case of employing, as the alkyl (meth)acrylate ester, butyl acrylate singly or butyl acrylate and 2-ethylhexyl acrylate in combination, a proportion of butyl acrylate and 2-ethylhexyl acrylate is not particularly restricted but may be selected within a range of 2-ethylhexyl acrylate/butyl acrylate (weight ratio) about from 0/100 to 55/45, preferably from 5/95 to 60/40.

The monomer component constituting the acrylic polymer may include, in addition to an alkyl (meth)axcrylate ester as a principal component, another monomer component capable of copolymerization with the alkyl (meth)axcrylate ester, which may also be called "copolymerizable monomer component". A proportion of the alkyl (meth)axcrylate ester to the entire monomer component constituting the acrylic polymer is 80% by weight or more (for example, from 80 to 99.8% by weight), preferably 85% by weight or more (for example, from 85 to 99.5% by weight), and more preferably 90% by weight or more (for example, from 90 to 99% by weight).

The copolymerizable monomer component may be employed for the purpose of introducing a crosslinking point in the acrylic polymer, or increasing a coagulation force of the acrylic polymer. The copolymerizable monomer component may be employed singly or in a combination of two or more kinds.

More specifically, for introducing a crosslinking point into the acrylic polymer, a monomer component containing a functional group, particularly a monomer component containing a thermally crosslinkable function group for introducing a thermally crosslinkable crosslinking point into the acrylic polymer, may be used as the copolymerizable monomer component. The functional group-containing monomer component allows to improve an adhesion to an article to be adhered. Such a functional group-containing monomer component is not particularly restricted so long as it is copolymerizable with the alkyl (meth)acrylate ester and also has a functional group constituting a crosslinking point, and examples thereof include carboxyl group-containing monomers such as (meth)acrylic acid, itaconic acid, crotonic acid, maleic acid, fumaric acid and isocrotonic acid, and acid anhydrides thereof including maleic anhydride and itaconic anhydride; hydroxyl group-containing monomers such as hydroxyalkyl (meth)acrylate including 2-hydroxyethyl (meth)acrylate, 2-hydroxypropyl (meth)acrylate and 2-hydroxybutyl (meth)acrylate, vinyl alcohol and allyl alcohol; amide monomers such as (meth)acrylamide, N,N-dimethyl-(meth)acrylamide, N-butyl-(meth)acrylamide, N-methylol- (meth) acrylamide, N-methylolpropane (meth) acrylamide, N-methoxymethyl-(meth)acrylamide, and N-methoxybutyl-(meth)acrylamide; amino group-containing monomers such as aminoethyl (meth)acrylate, N,N-dimethylaminoethyl (meth)acrylate, and t-butylaminoethyl (meth)acrylate; epoxy group-containing monomers such as glycidyl (meth)acrylate and methylglyciyl (meth)acrylate; cyano group-containing monomers such as acrylonitrile and methacrylonitrile; and monomers having a nitrogen atom-containing ring such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloylmorpholine. As the functional group-containing monomer component, a carboxyl group-containing monomer such as acrylic acid or an acid anhydride thereof may be preferably used. The functional group-containing monomer component may be used singly or in two or more kinds.

The amount of the functional group-containing monomer component may be selected, with respect to 100 parts by weight of the alkyl (meth)acrylate ester as the principal monomer component, from a range of 12 parts by weight or less, for example, from 0.5 to 12 parts by weight, and preferably from 1 to 8 parts by weight.

Also, another copolymerizable monomer component may be used for increasing a coagulation force of the acrylic polymer. Examples of such another copolymerizable monomer component include vinyl ester monomers such as vinyl acetate and vinyl propionate; aromatic vinyl monomers such as styrene, substituted styrenes including α-methylstyrene, and vinyltoluene; (meth)acrylate esters containing a nonaromatic ring, such as cycloalkyl (meth)acrylate esters including cyclohexyl (meth)acrylate and cyclopentyl di(meth)acrylate, and isobornyl (meth)acrylate; (meth)acrylate esters containing an aromatic ring, such as aryl (meth)acrylate esters including phenyl (meth)acrylate, aryloxyalkyl (meth)acrylate esters including phenoxyethyl (meth)acrylate, and arylalkyl (meth)acrylate esters including benzyl (meth)acrylate: olefinic monomers such as ethylene, propylene, isoprene, butadiene and isobutylene; vinyl chloride, vinylidene chloride; isocyanate group-containing monomers such as 2-(meth)acryloyloxyethylisocyanate; alkoxy group-containing monomers such as methoxyethyl (meth)acrylate and ethoxyethyl (meth)acrylate; vinyl ether monomers such as methyl vinyl ether and ethyl vinyl ether; and polyfunctional monomers such as 1,6-hexanediol di(meth)acrylate, ethylene glycol dimethacrylate, diethylene glycol di(meth)acrylate, propylene glycol di (meth) acrylate, (poly)propylene glycol di(meth)acrylate, neopentyl glycol di(meth)acrylate, pentaerythritol di(meth)acrylate, trimethylolpropane tri(meth)acrylate, pentaerythritol txi(meth)acrylate, dipentaerythritol hexa(meth)acrylate, glycerin di(meth)acrylate, epoxy acrylate, polyester acrylate, urethane acrylate, divinylbenzene, butyl di(meth)acrylate, and hexyl (meth)acrylate. Such another copolymerizable monomer component may be used singly or in two or more kinds.

For polymerizing the water-dispersible acrylic polymer, conventionally or commonly used polymerization methods may be adopted. For the polymerization, various polymerization methods such as a common collective charging method (collective polymerization), or a monomer dropwise addition method (continuous addition method or divided addition method) may be adopted. The polymerization temperature may be suitably selected depending on the type of the monomer and the type of the polymerization initiator, and may be selected, for example, within a range of from 20 to 100°C.

A polymerization initiator to be employed at the polymerization may be selected from those conventionally or commonly used. Examples of the polymerization initiator include azo type polymerization initiators such as 2,2'-azobisisobutyronitrile, 2,2'-azobis(2-methylpropionamidine disulfate salt, 2,2'-azobis(2-amidinopropane) dihydrochloride, 2,2'-azobis[2-(5-methyl-2-imidazolin-2-yl)propane] dihydrochloride, 2,2'-azobis(N,N'-dimethyleneisobutylamidine), 2,2'-azobis(4-methoxy-2,4-dimethylvaleronitrile), 2,2'-azobis(2,4,4-trimethylpentane), and dimethyl-2,2'-azobis(2-methyl propionate); persulfate salts such as potassium persulfate and ammonium persulfate; peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane and hydrogen peroxide; substituted ethane polymerization initiators such as phenyl-substituted ethane; aromatic carbonyl compounds; and redox initiators formed by a combination of a peroxide and a reducing agent such as a combination of a peroxide and a reducing agent including a combination of hydrogen peroxide water and ascorbic acid, a combination of a peroxide and an iron (II) salt including a combination of hydrogen peroxide water and an iron (II) salt, and a combination of a persulfate salt and sodium hydrogensulfite. The polymerization initiator may be used singly or in a combination of two or more kinds.

The polymerization initiator may be used in a commonly used amount, which may be selected, for example, from a range of from 0.005 to 1 part by weight with respect to 100 parts by weight of all the monomer components.

Additionally, at the polymerization, a chain transfer agent may be used for regulating the molecular weight. There may be used an conventionally or commonly used chain transfer agent, and examples thereof include mercaptans such as dodecanthiol(laurylmercaptan), glycidylmercaptan, 2-mercaptoethanol, mercaptoacetic acid, 2-ethylhexyl thioglycolic acid, and 2,3-dimethylmercapto-1-propanol; and α-methylstyrene dimer. The chain transfer agent may.be used singly or in a combination of two or more kinds. The chain transfer agent may be used in a commonly used amount, which may be selected, for example, from a range of from 0.001 to 0.5 parts by weight with respect to 100 parts by weight of all the monomer components.

Since the water-dispersible acrylic polymer has a form of an emulsion, it may be prepared by a polymerized substance of emulsion form prepared by an emulsion polymerization method, or may be prepared by dispersing an acrylic polymer, which is prepared by a polymerization method other than the emulsion polymerization method, into water. An emulsifier may be used at the emulsion polymerization or in dispersing the acrylic polymer in water. The emulsifier may be used singly or in a combination of two or more kinds.

The emulsifier may be of any type, but is preferably an anionic emulsifier or a nonionic emulsifier. Examples of the anionic emulsifier include alkyl sulfate salt anionic emulsifiers such as sodium laurylsulfate, ammonium laurylsulfate, and potassium laurylsulfate; anionic emulsifiers of polyoxyethylene alkyl ether sulfate salt type such as sodium polyoxyethylene lauryl ether sulfate; anionic emulsifiers of polyoxyethylene alkylphenyl ether sulfate salt type such as sodium polyoxyethylene alkylphenyl ether sulfate; sulfate salt anionic emulsifiers such as sodium dodecylbenzenesulfonate; and sulfosuccinate anionic emulsifiers such as disodium lauryl sulfosuccinate and disodium lauryl polyoxyethyelenesulfosuccinate. Further, examples of the nonionic emulsifier include polyoxyethylene alkyl ether nonionic emulsifiers such as polyoxyethylene lauryl ether; nonionic emulsifiers of polyoxyethylene alkylphenyl ether type such as polyoxyethylene laurylphenyl ether; polyoxyethylene fatty acid esters and polyoxyethylene-polyoxypropylene block polymers. The emulsifier may be used singly or in a combination of two or more kinds.

An amount of the emulsifier is not particularly restricted so long as it is possible to prepare the acrylic polymer into an emulsion form, and may be selected, for example, within a range of from 0.2 to 10% by weight, preferably from 0.5 to 5% by weight, with respect to the acrylic polymer or the entire monomer components.

The light-shielding pressure-sensitive adhesive composition of the present invention includes a colorant for providing the composition with a light-shielding property.

At the addition of the colorant to a dispersion liquid containing the acrylic polymer, it is preferable that an aqueous dispersion of the colorant is prepared by mixing the colorant, water, and optionally a suitable dispersing agent in advance, and then the aqueous dispersion of the colorant is added to the dispersion liquid containing the acrylic polymer. Conventionally, it has been difficult to uniformly disperse a colorant such as a pigment into an aqueous dispersion. Therefore, it has been tried to achieve the dispersion by using the colorant after subjecting the surface thereof to a hydrophilically modifying treatment, by agitating with a high-speed agitation or by agitating for a long time. However, the aforementioned method including adding the aqueous dispersion containing colorant allows, even in a case of using a colorant with a hydrophobic surface, to disperse the colorant in the aqueous dispersion containing the acrylic polymer promptly and easily with an excellent dispersion stability.

In the aqueous dispersion, the colorant has a solid concentration of from 20 to 50% by weight, preferably from 25 to 45% by weight. If the solid concentration is more than 50% by weight, the viscosity of the aqueous dispersion becomes high, whereby bubbles generated by the agitation at the preparation of the aqueous dispersion cannot be easily removed or the colorant cannot be easily dispersed in the aqueous dispersion containing the acrylic polymer in some cases. If the solid concentration is less than 20% by weight, a large amount of water, as the aqueous dispersion of the colorant, is added to the aqueous dispersion containing the acrylic polymer to lower the solid concentration of the pressure-sensitive adhesive composition, whereby the subsequent operation for preparing the pressure-sensitive adhesive layer may become difficult.

The amount of the colorant is not particularly restricted, and may be regulated according to the type of the colorant and a desired level of the light-shielding property. For example, it may be selected within a range of 5 parts by weight or less such as from 0.2 to 5 parts by weight, particularly 5 parts by weight or less such as from 0.2 to 3 parts by weight, with respect to 100 parts by weight of all the solids in the light-shielding pressure-sensitive adhesive composition. When the amount of the colorant is more than 5 parts by weight, pressure-sensitive adhesive material becomes harder, possibly leading to a lowered adhesive property. In this regard, the light-shielding pressure-sensitive adhesive composition of the invention may contain other components such as various additives, in addition to the acrylic polymer and the colorant, as will be explained later. In such a case, all the solids in light-shielding pressure-sensitive adhesive composition include such other components.

In the light-shielding pressure-sensitive adhesive composition, the light-shielding property (light transmittance) is principally determined by the type and amount of the colorant to be added, but a particle size of the colorant also affects the light-shielding property of the light-shielding pressure-sensitive adhesive composition. For an equal weight, a colorant having a smaller particle size has a larger total surface area, in comparison with a colorant having a larger particle size, thereby showing a higher coloring power. Therefore, for colorants of a same type added in a same weight, a colorant having a smaller particle size provides a pressure-sensitive adhesive composition with a higher light-shielding property, in comparison with the case of using a colorant having a larger particle size. In other words, in order to obtain a same light-shielding property with colorants of a same type, the desired light-shielding property can be attained with a smaller amount of addition (weight) by utilizing a colorant of a smaller particle size, in comparison with a case of using a colorant of a larger particle size. Therefore, the colorant preferably has a particle size of 0.5 µm or less, for example from 0.05 to 0.5 µm, and more preferably 0.3 µm or less, for example from 0.05 to 0.3 µm in median size. The particle size of the colorant may be measured by a light scattering method, by "LS 13 320" manufactured by Beckman Coulter Co.

Examples of the colorant include carbon blacks such as furnace black, thermal black, acetylene black, channel black, lamp black, and ketzen black; oxides such as iron oxide, titanium oxide, zinc oxide, magnesium oxide, cobalt oxide, copper oxide, chromium oxide, and alumina; sulfate salts such as calcium sulfate, barium sulfate, iron sulfate, and mercury sulfate; carbonate salts such as calcium carbonate, magnesium carbonate and dolomite; metal powders such as iron powder, copper powder, tin powder, lead powder and aluminum powder; organic pigments such as azo pigments, phthalocyanine pigments and dioxazine pigments; and graphite. The colorant may be selected from conventional colorants, in consideration of influences on the adhesive property and other properties of the light-shielding pressure-sensitive adhesive composition.

Among these colorants, a black colorant such as iron oxide, graphite or carbon black is preferable because of an excellent light-shielding property, and particularly carbon black is preferable as it is excellent in light fastness and weather resistance, and has little influence in the adhesive property of the light-shielding pressure-sensitive adhesive composition.

In preparing the aqueous dispersion of the colorant by mixing the colorant and water, a suitable dispersing agent may be used. In the case that a stable dispersion liquid can be prepared without using the dispersing agent, for example, when the colorant surface is subjected to a hydrophilic treatment, the dispersing agent need not be used. For example, a surfactant may be used as the dispersing agent.

Examples of the surfactant include nonionic surfactants such as polyoxyethylene alkyl ether, polyoxyethylene fatty acid ester, polyoxyethylene alkylphenyl ether, polyoxyethylene alkylamine, polyoxyethylene fatty acid amide, polyoxyalkylene benzylphenyl ether, polyoxyethylene fatty acid bisphenyl ether, and polyoxyethylene-polyoxypropylene block polymer; anionic surfactants such as alkylsulfate salt, polyoxyethylene alkylphenyl ether sulfate salt, polyoxyethylene benzylphenyl ether sulfate salt, alkylbenzenesulfonate salt, dialkylsulfosuccinate salt, polyoxyethylene alkyl ether sulfosuccinate half ester, a fatty acid salt (soap), an alkylphosphate salt, polyoxyethylene alkyl ether phosphate salt, and styrenemaleic acid resin half ester; and cationic surfactants such as methylated ammonium chloride and alkyltrimethylammonium chloride. The dispersing agent may be used singly or in a combination of two or more kinds.

The amount of the dispersing agent is not particularly restricted, and may be selected from a range of about from 2 to 30 parts by weight, preferably from 4 to 20 parts by weight, with respect to 100 parts by weight of the colorant. The dispersing agent to be employed in preparing the aqueous dispersion of the colorant may be an emulsifier same as or different from the emulsifier used in the preparation of the water-dispersible acrylic polymer.

The aqueous dispersion of the colorant may be obtained by mixing and agitating water, the colorant and optional dispersing agent. The dispersing operation may be executed in a conventional or common method and is not particularly restricted, but a uniform dispersion liquid can be obtained by an agitation with a disper for about 2 to 20 minutes at a speed of about from 1000 to 4000 rpm. An agitating range may be selected so as to obtain a uniform dispersion liquid, according to the types of the colorant and the dispersing agent to be used.

The light-shielding pressure-sensitive adhesive composition can be produced by mixing the dispersion liquid containing the acrylic polymer which is prepared as described above, and the aqueous dispersion containing the colorant. The mixing may be executed by a method of adding the aqueous dispersion of the colorant to the dispersion liquid containing the acrylic polymer, or by a method of adding the dispersion liquid containing the acrylic polymer to the aqueous dispersion of the colorant, but is usually executed by the method of adding the aqueous dispersion of the colorant to the dispersion liquid containing the acrylic polymer. In such a case, the solid concentration of the dispersion liquid containing the acrylic polymer may be selected, for example, from a range of about from 45 to 80% by weight, preferably from 50 to 70% by weight. It may be selected in consideration of a balance of viscosity with the aqueous dispersion of the colorant to be used and an operability.

The light-shielding pressure-sensitive adhesive composition of the invention may contain other components, in addition to the acrylic polymer and the colorant. In such a case, the light-shielding pressure-sensitive adhesive composition can be produced by mixing the acrylic polymer and such other components (components other than the colorant) to prepare a pressure-sensitive adhesive composition which does not contain the colorant (light-shielding pressure-sensitive adhesive composition precursor), and subsequently adding and mixing the aqueous dispersion of the colorant to the light-shielding pressure-sensitive adhesive composition precursor; or by adding and mixing the light-shielding pressure-sensitive adhesive composition precursor to the aqueous dispersion of the colorant. Even in such a case, the solid concentration of the dispersion liquid containing the acrylic polymer (light-shielding pressure-sensitive adhesive composition precursor) may be selected, for example, within a range of about from 45 to 80% by weight, preferably from 50 to 70% by weight. In this regard, it is possible to add the other components partly or entirely to the mixture of the dispersion liquid containing the acrylic polymer and the aqueous dispersion of the colorant, or to add and mix the water-dispersible acrylic polymer and other components in succession into the aqueous dispersion of the colorant.

According to the necessity, the light-shielding pressure-sensitive adhesive composition of the invention may contain, in addition to the acrylic polymer and the colorant, another component for the purposes of modification of the pressure-sensitive adhesive composition such as an improvement in the adhesive property. Examples of such another component include a crosslinking agent and an adhesion-providing resin.

Examples of the crosslinking agent include isocyanate crosslinking agents, epoxy crosslinking agents, oxazoline crosslinking agents, aziridine crosslinking agents, melamine crosslinking agents, peroxide crosslinking agents, urea crosslinking agents, metal alkoxide crosslinking agents, metal chelate crosslinking agents, metal salt crosslinking agents, carbodiimide crosslinking agents, amine crosslinking agents, and silane coupling agents. The crosslinking agent may be an oil-soluble one or a water-soluble one. The crosslinking agent may be used singly or in a combination of two or more kinds. The amount of the crosslinking agent is not particularly restricted, and may be selected, for example, within a range of 10 parts by weight or less such as from 0.005 to 10 parts by weight, and preferably from 0.01 to 5 parts by weight, with respect to 100 parts by weight of the acrylic polymer.

Examples of the adhesion-providing resin include rosin resins capable of providing adhesion, terpene resins capable of providing adhesion, hydrocarbon resins capable of providing adhesion, epoxy resins capable of providing adhesion, elastomer resins capable of providing adhesion, phenolic resins capable of providing adhesion, and ketone resins capable of providing adhesion. The adhesion-providing resin may be used singly or in a combination of two or more kinds.

Specific examples of the rosin resin providing adhesion include undenatured rosins (crude rosins) such as gum rosin, wood rosin and tall oil rosin, denatured rosins obtained by denaturing such undenatured rosins by hydrogenation, disproportionation or polymerization, including a hydrogenated rosin, a disproportionated rosin, a polymerized rosin or a rosin otherwise modified chemically, and various rosin derivatives. Examples of such rosin derivatives include rosin esters such as a rosin ester compound formed by esterifying an undenatured rosin with an alcohol, and an ester compound of a denatured rosin formed by esterifying a denatured rosin such as a hydrogenated rosin, a disproportionated rosin or a polymerized rosin with an alcohol; unsaturated fatty acid-denatured rosins, formed by denaturing an undenatured rosin or a denatured rosin including a hydrogenated rosin, a disproportionated rosin or a polymerized rosin with an unsaturated fatty acid; unsaturated fatty acid-denatured rosin esters, formed by denaturing a rosin ester with an unsaturated fatty acid; rosin alcohols formed by reducing a carboxyl group in an undenatured rosin, a denatured rosin including a hydrogenated rosin, a disproportionated rosin or a polymerized rosin, an unsaturated fatty acid-denatured rosin or an unsaturated fatty acid-denatured rosin ester; and metal salts of rosins such as non-denatured rosins, denatured rosins and rosin derivatives, particularly rosin esters. As the rosin derivative, there may also be used rosin phenol resins, obtained by adding phenol to rosins such as a non-denatured rosin, a denatured rosin or rosin derivatives with an acid catalyst, followed by thermal polymerization.

Examples of the terpene resin providing adhesion include terpene resins such as an α-pinene polymer, a β-pinene polymer and a dipentene polymer, and denatured terpene- resins formed by denaturing (such as phenol denaturing, aromatic denaturing, hydrogenation denaturing or hydrocarbon denaturing) such terpene resins.

Examples of the hydrocarbon resin providing adhesion include various hydrocarbon-based resins, namely aliphatic hydrocarbon resins, for example, polymers of aliphatic hydrocarbons such as olefins or dienes having 4 to 5 carbon atoms, e.g., an olefin such as 1-butene, isobutylene or 1-pentene, or a diene such as butadiene, 1,3-pendadiene or isoprene; aromatic hydrocarbon resins, for example, polymers of vinyl-containing aromatic hydrocarbons having 8 to 10 carbon atoms such as styrene, vinyltoluene, α-methylstyrene, indene and methylindene; alicyclic hydrocarbon resins such as alicyclic hydrocarbon resins formed by a cyclized dimerization of so-called C4 petroleum fraction or C5 petroleum fraction followed by a polymerization, polymers of cyclic diene compounds such as cyclopentadiene, dicyclopentadiene, ethylidenenorbornene or dipentene and hydrogenated products thereof, and alicyclic hydrocarbon resins formed by hydrogenating an aromatic ring of the aforementioned aromatic hydrocarbon resins and aliphaticaromatic petroleum resins; aliphatic/aromatic petroleum resins such as a styrene-olefin copolymer; hydrogenated hydrocarbon resins; coumarone resins; and coumarone-indene resins.

The amount of the adhesion-providing resin is not particularly restricted, and may be suitably selected according to the desired adhesive power. For example it may be selected within a range, with respect to 100 parts by weight (solid content) of the water-dispersible acrylic polymer, of from 10 to 100 parts by weight, preferably from 15 to 80 parts by weight and more preferably from 20 to 60 parts by weight.

Furthermore, according to the necessity, the light-shielding pressure-sensitive adhesive composition may contain other additives such as an antiaging agent, an ultraviolet absorber, an antioxidant, a light stabilizer, a releasing property regulating agent, a plasticizer, a softener, a filler, and an antistatic agent, and may also contain a base such as ammonia water or an acid for regulating pH.

In the light-shielding pressure-sensitive adhesive sheet of the invention, the light-shielding pressure-sensitive adhesive layer 2 may be formed, for example, by coating the pressure-sensitive adhesive composition having the light-shielding property which is prepared as described above, by means of a common coater on the optically-transparent substrate 1 or the releasable liner 3, followed by optional drying under heating. For example, in the light-shielding pressure-sensitive adhesive sheet including a substrate as shown in Figs. 2A, 2B, 3A and 3B, the light-shielding pressure-sensitive adhesive layer 2.may be formed by coating the light-shielding pressure-sensitive adhesive composition directly on the optically-transparent substrate 1, or by coating the light-shielding pressure-sensitive adhesive composition onto the releasable liner 3 to form a light-shielding pressure-sensitive adhesive layer 2, followed by adhering the light-shielding pressure-sensitive adhesive layer 2 to the optically-transparent substrate 1 thereby obtaining a light-shielding pressure-sensitive adhesive sheet including a releasable liner.

The thickness of a light-shielding pressure-sensitive adhesive layer 2 is not particularly restricted, and a thickness after drying may be selected, for example, within a range of from 2 to 150 µm, preferably from 5 to 100 µm. The thickness may be regulated in such a manner, in the case of a pressure-sensitive adhesive sheet which does not include a substrate as shown in Figs. 1A and 1B, that the light transmittance of the light-shielding pressure-sensitive adhesive layer 2 becomes 1% or less, and, in the case of a pressure-sensitive adhesive sheet which include a substrate as shown in Figs. 2A, 2B, 3A and 3B, that the light transmittance of the laminate formed by the light-shielding pressure-sensitive adhesive layer 2 and the optically-transparent substrate 1 becomes 1% or less, thus being suitably regulated according to the purpose of the pressure-sensitive adhesive sheet. Examples of the common coater include a gravure roll coater, a reverse roll coater, a kiss roll coater, a dip roll coater, a bar coater, a knife coater, and a spray coater.

The optically-transparent substrate 1 may be formed by a substrate having translucency. Examples thereof include transparent or semi-transparent plastic films such as a polypropylene film, an ethylene-propylene copolymer film, a polyester film and a polyvinyl chloride film; papers having translucency such as a Japanese paper or a craft paper; cloths having translucency such as a cotton cloth or a staple fiber cloth; and non-woven cloths having translucency such as a polyester non-woven cloth or a vinylon non-woven cloth. The plastic film may be a non-stretched film or a stretched film including a monoaxially stretched film or a biaxially stretched film. Further, a side of the substrate, on which the pressure-sensitive adhesive layer is to be provided, may be subjected to an ordinary surface treatment, for example, with an undercoating agent or a corona discharge. The thickness of the optically-transparent substrate may be suitably selected according to the purpose, and is, for example, about 20 to 200 µm. Further, as the substrate, a substrate without translucency, for example, a substrate having a light transmittance less than 1% may be employed, instead of the optically-transparent substrate 1.

The releasable liner 3 is not particularly restricted, and may be suitably selected from conventional ones. As the releasable liner, a substrate having, on at least one side thereof, a releasably treated layer formed by a releasing agent such as a silicone-type releasing agent, a fluorinated-type releasing agent or a long-chain alkyl type releasing agent may be preferably employed, and there can also be employed a substrate of low adhesive property formed by a fluorinated polymer such as polytetraethylene, polychlorotrifluoroethylene, polyvinyl fluoride, polyvinylidene fluoride, a tetrafluoroethylene-hexafluoropropylene copolymer, or a chlorofluoroethylene-vinylidene fluoride copolymer, or a substrate of low adhesive property formed by a non-polar polymer such as an olefinic resin including polyethylene or polypropylene. Among these, a common thin substrate having a releasing layer of a silicone type releasing agent on one or both sides may be used particularly advantageously. The thickness of the releasable liner is not particularly restricted, and may be selected, for example, within a range of from 15 to 500 µm, preferably from 25 to 500 µm.

The light-shielding pressure-sensitive adhesive sheet of the invention can be preferably used in various applications, for example, those requiring a light-shielding property, which are not particularly restricted. For example, the light-shielding pressure-sensitive adhesive sheet of the invention can be used for fixing automotive materials such as a door trim, a floor mat and a.. sound-absorbing material; fixing residential materials such as an external panel, a skirting board or a flooring; and fixing an electronic component such as fixation of a backlight module and a liquid crystal module in a liquid crystal display apparatus.

The light-shielding pressure-sensitive adhesive sheet of the invention obtained as above has a high light-shielding property and an excellent adhesive power. Further, since the pressure-sensitive adhesive layer itself has a high light-shielding property, it is not necessary to use a light-shielding substrate or to provide another light-shielding layer as in the case of a conventional light-shielding pressure-sensitive adhesive sheet, so that the substrate is selectable within a wide range, and the sheet may also be formed as a light-shielding pressure-sensitive adhesive sheet which does not include a substrate. Moreover, since it can be produced by employing a light-shielding pressure-sensitive adhesive composition utilizing a water-dispersible acrylic polymer as the base polymer, it scarcely causes contamination, for example, by a residual organic solvent, and is advantageously usable in fixing automotive materials, residential materials, electronic components and the like.

### Examples

In the following, the present invention will be further clarified by examples. In the following description, "part" means "part by weight", and "%" means "% by weight".

### Preparation of water-dispersible acrylic polymer

In a separable flask equipped with a cooling pipe, a nitrogen introducing pipe, a thermometer and an agitator, 0.1 parts of 2,2'-azobis[N-(2-carboxyethyl)-2-methylpropionamidine] hydrate (trade name: VA-057, manufactured by Wako Pure Chemical Industries, Ltd.) and 40 parts of ion-exchanged water were charged and agitated for 1 hour under introduction of nitrogen gas. Then an emulsion, prepared by adding 68 parts of butyl acrylate, 29 parts of 2-ethylhexyl acrylate, 2.9 parts of acrylic acid and 8 parts of a 26% aqueous solution of sodium polyoxyethylene alkylphenyl ether sulfate into 24.3 parts of water, was dropwise added over 4 hours, and the mixture was further ripened for 3 hours. After the polymerization, ammonia water was added to pH 8, whereby a water-dispersible acrylic polymer was obtained.

### Preparation of light-shielding pressure-sensitive adhesive composition precursor

In 100 parts (solid) of the water-dispersible acrylic polymer above, 0.7 parts of a water-soluble oxazoline crosslinking agent (trade name: Epocross WS-700, manufactured by Nippon Shokubai Co.), dissolved in water, were added, and an aqueous dispersion of a pressure-sensitive adhesive property-providing rosin phenol resin (trade name: Tamanol E-200-NT, manufactured by Arakawa Chemical Industries, Ltd.) was added in an amount of 30 parts as calculated in solid, whereby a light-shielding pressure-sensitive adhesive composition precursor (aqueous dispersion containing the acrylic polymer and the pressure-sensitive adhesive property-providing resin) was obtained.

### Example 1

Twenty-five g of carbon black having a median size of 0.353 µm (trade name: SEAST SO FEF, manufactured by Tokai Carbon Co.), 8.3 g (2.5 g in solid content) of a dispersant (trade name: Arastar 703S, 30% by weight aqueous solution, manufactured by Arakawa Chemical Industries, Ltd.), and 66.7 g of ion-exchanged water were agitated for 10 minutes at 3,000 rpm by a disper to obtain an aqueous dispersion of carbon black having a solid concentration of 25%. The aqueous carbon black dispersion was added in an amount of 1 part in solid content to 1.00 parts (solid content) of the light-shielding pressure-sensitive adhesive composition precursor, and the mixture was agitated with a Three-one Motor to a uniform aqueous dispersion, thereby obtaining a light-shielding pressure-sensitive adhesive composition. The dispersant was added in 10 parts in solid, with respect to 100 parts of carbon black.

### Example 2

An aqueous dispersion of carbon black having a median size of 0.096 µm (AQUA BLACK 162, manufactured by Tokai Carbon Co., LTD.) was added in an amount of 1 part in solid content to 100 parts (solid content) of the light-shielding pressure-sensitive adhesive composition precursor, and the mixture was agitated with a Three-one Motor to a uniform aqueous dispersion, thereby obtaining a light-shielding pressure-sensitive adhesive composition.

### Example 3

An aqueous dispersion of carbon black having a median size of 0.082 µm (trade name: UNISPERSE Black C-S, manufactured by Ciba Ltd.) was added in an amount of 1 part in solid content to 100 parts (solid content) of the light-shielding pressure-sensitive adhesive composition precursor, and the mixture was agitated with a Three-one Motor to a uniform aqueous dispersion, thereby obtaining a light-shielding pressure-sensitive adhesive composition.

### Comparative Example 1

One part of carbon black having a median size of 0.809 µm (trade name: AQUA BLACK HA3, manufactured by Tokai Carbon Co., Ltd.) was added to 100 parts (solid content) of the light-shielding pressure-sensitive adhesive composition precursor, and the mixture was agitated with a Three-one Motor, thereby obtaining a light-shielding pressure-sensitive adhesive composition.

### Comparative Example 2

Colored particles having a median size of 8.197 µm (trade name: CHEMISNOW CMX-600RBK(W), aqueous dispersion having a solid concentration of 66%, manufactured by Soken Chemical & Engineering Co., Ltd.) were added in an amount of 1 part in solid content to 100 parts (solid content) of the light-shielding pressure-sensitive adhesive composition precursor, and the mixture was agitated with a Three-one Motor, thereby obtaining a light-shielding pressure-sensitive adhesive composition.

### Preparation of light-shielding pressure-sensitive adhesive sheet

On a releasable liner having a releasing layer formed by a silicone releasing agent (trade name: SLB-80W3D, manufactured by Kaito Chemical Industry Co., Ltd.), the light-shielding pressure-sensitive adhesive composition obtained in each of Examples and Comparative Examples was coated on the surface of the releasing layer and dried at 100°C for 2 minutes to obtain a pressure-sensitive adhesive layer of a thickness of 60 µm. The pressure-sensitive adhesive layer was then adhered on both sides of an optically-transparent non-woven substrate (trade name: SP base paper-14, manufactured by Daifuku Paper M.F.G Co., Ltd.), thereby obtaining a two-sided light-shielding pressure-sensitive adhesive sheet including an optically-transparent substrate, light-shielding pressure-sensitive adhesive layers and releasable liners.

### Evaluation test

Following evaluation tests were conducted on the light-shielding pressure-sensitive adhesive composition prepared in each of Examples and Comparative Examples, and the light-shielding pressure-sensitive adhesive sheet prepared with such compositions. Results are shown in Table 1.

### Dispersibility of colorant

A light-shielding pressure-sensitive adhesive composition was coated, by a predetermined amount (about 20 g), on a releasing paper, and uniformity of coloration was judged by a visual observation.

### Light transmittance

A sample was prepared by cutting the obtained light-shielding pressure-sensitive adhesive sheet into a square shape of an area of 25 cm², and was subjected to a measurement of light transmittance by a haze meter (trade name: HZ-1, manufactured by Suga Test Instruments Co.).

### Adhesive power

A light-shielding pressure-sensitive adhesive sheet, obtained in each of Examples and Comparative Examples, was adhered onto a stainless steel (SUS) plate by a method of reciprocating a roller of 2 kg by one cycle, and, after a standing for 20 minutes at 23°C, was peeled by a tensile tester under conditions of a tensile speed of 300 mm/min and a peeling angle of 180°, thereby determining an adhesive power (23°C, 50%RH; N/20 mm).

### End peeling preventive property

A light-shielding pressure-sensitive adhesive sheet, obtained in each of Examples and Comparative Examples, was adhered onto an aluminum plate having a thickness of 0.5 mm, a longitudinal size of 100 mm and a lateral size of 10 mm, in such a manner that one side of the pressure-sensitive adhesive layer was in contact with.the aluminum plate, and then the other side of the pressure-sensitive adhesive was adhered to a lateral surface of a cylindrical rod of ABS resin having a diameter of 50 mm in such a manner that the longitudinal direction of the pressure-sensitive adhesive sheet lies in the longitudinal direction of the ABS cylindrical rod. The sheet was let to stand in an environment of 70°C for 2 hours, with the cylindrical rod in a vertically standing state, and a peeling length (height, unit: mm) at the end of the aluminum plate was measured.

**Table 1**

| | Dispersibility | Light transmittance [%] | Adhesive power [N/20 mm] | End peeling length [mm] |
|---|---|---|---|---|
| Example 1 | satisfactory | 0 | 16.6 | 2.0 |
| Example 2 | satisfactory | 0 | 15.6 | 2.0 |
| Example 3 | satisfactory | 0 | 16.1 | 2.0 |
| Comparative Example 1 | defective | 1.6 | 15.5 | 2.0 |
| Comparative Example 2 | defective | 13.2 | 13.3 | 6.0 |

This application is based on Japanese patent application No. 2005-352768 filed December 6, 2005.

## Claims

1. A light-shielding pressure-sensitive sheet comprising a light-shielding pressure-sensitive adhesive layer obtainable by forming a pressure-sensitive adhesive composition containing a water-dispersible acrylic polymer as a main component and a colorant into a sheet form, wherein the pressure-sensitive adhesive composition is obtainable by mixing in a dispersion liquid containing an acrylic polymer an aqueous dispersion having a solid concentration of from 20 to 50% by weight of a colorant and wherein the pressure-sensitive adhesive layer has a light transmittance of 1% or less.

2. The light-shielding pressure-sensitive adhesive sheet according to claim 1, further comprising:
an optically-transparent substrate.

3. The light-shielding pressure-sensitive adhesive sheet according to any one of claims 1 or 2, wherein the colorant has a median size of 0.5 µm or less.

4. The light-shielding pressure-sensitive adhesive sheet according to any one of claims 1 to 3, wherein the colorant is carbon black.

5. Use of the light-shielding pressure-sensitive adhesive sheet according to any one of claims 1 to 4 in fixing an automotive material.

6. Use of the light-shielding pressure-sensitive adhesive sheet according to any one of claims 1 to 4 in fixing a residential material.

7. Use of the light-shielding pressure-sensitive adhesive sheet according to any one of claims 1 to 4 in fixing an electronic component.

## Patentansprüche

1. Lichtabschirmende, druckempfindliche Klebefolie, umfassend eine lichtabschirmende, druckempfindliche Klebeschicht, erhältlich durch Bringen einer druckempfindlichen Klebezusammensetzung, die ein wasserdispergierbares Acrylpolymer als einen Hauptbestandteil und ein Farbmittel enthält, in eine Folienform, wobei die druckempfindliche Klebezusammensetzung erhältlich ist durch Mischen einer wässrigen Dispersion mit einer Feststoffkonzentration von 20 bis 50 Gew.-% eines Farbmittels in eine Dispersionsflüssigkeit, die ein Acrylpolymer enthält, und worin die druckempfindliche Klebeschicht eine Lichtdurchlässigkeit von 1% oder weniger besitzt.

2. Lichtabschirmende, druckempfindliche Klebefolie nach Anspruch 1, weiter enthaltend:
ein optisch transparentes Substrat.

3. Lichtabschirmende, druckempfindliche Klebefolie nach einem der Ansprüche 1 oder 2, wobei das Farbmittel eine mittlere Größe von 0,5 µm oder weniger besitzt.

4. Lichtabschirmende, druckempfindliche Klebefolie nach einem der Ansprüche 1 bis 3, wobei das Farbmittel Carbon Black ist.

5. Verwenden der lichtabschirmenden, druckempfindlichen Klebefolie nach einem der Ansprüche 1 bis 4 zum Fixieren eines Automobilmaterials.

6. Verwenden der lichtabschirmenden, druckempfindlichen Klebefolie nach einem der Ansprüche 1 bis 4 zum Fixieren eines stationären Materials.

7. Verwenden der lichtabschirmenden, druckempfindlichen Klebefolie nach einem der Ansprüche 1 bis 4 zum Fixieren einer elektronischen Komponente.

## Revendications

1. Feuille adhésive sensible à la pression étanche à la lumière comprenant une couche adhésive sensible à la pression étanche à la lumière pouvant être obtenue en formant une composition adhésive sensible à la pression contenant un polymère acrylique dispersible dans l'eau comme composant principal et une matière colorante sous forme d'une feuille, où la composition adhésive sensible à la pression peut être obtenue en mélangeant dans un liquide de dispersion contenant un polymère acrylique une dispersion aqueuse ayant une concentration de solides de 20 à 50 % en poids d'une matière colorante et où la couche adhésive sensible à la pression a une transmission de la lumière de 1 % ou moins.

2. Feuille adhésive sensible à la pression étanche à la lumière selon la revendication 1 comprenant en outre :
un substrat optiquement transparent.

3. Feuille adhésive sensible à la pression étanche à la lumière selon l'une quelconque des revendications 1 et 2 où la matière colorante a une taille moyenne de 0,5 µm ou moins.

4. Feuille adhésive sensible à la pression étanche à la lumière selon l'une quelconque des revendications 1 à 3 où la matière colorante est le noir de carbone.

5. Utilisation de la feuille adhésive sensible à la pression étanche à la lumière selon l'une quelconque des revendications 1 à 4 dans la fixation d'un matériau pour automobile.

6. Utilisation de la feuille adhésive sensible à la pression étanche à la lumière selon l'une quelconque des revendications 1 à 4 dans la fixation d'un matériau résidentiel.

7. Utilisation de la feuille adhésive sensible à la pression étanche à la lumière selon l'une quelconque des revendications 1 à 4 dans la fixation d'un composant électronique.
